# EUROPÄISCHE PATENTSCHRIFT

(11) **EP 0 621 149 B1**
(45) Veröffentlichungstag und Bekanntmachung des Hinweises auf die Patenterteilung: **09.10.1996**
(21) Anmeldenummer: 94105658.2
(22) Anmeldetag: 13.04.1994
(51) Int. Cl.: B60J 3/02

(54) **Sonnenblende für Fahrzeuge**
Sun visor for vehicle
Pare-soleil pour véhicule

(30) Priorität: 17.04.1993 DE 4312435
(43) Veröffentlichungstag der Anmeldung: 26.10.1994
(73) Patentinhaber: GEBR. HAPPICH GmbH, D-42285 Wuppertal (DE)
(72) Erfinder: Agro, Marc, FR-57500 Saint Avold (FR); Hilt, Gerard, FR-57450 Henriville (FR); Hornung, Christian, Dipl.-Ing., D-71069 Sindelfingen/Maichingen (DE); Peters,Henning, Dipl.-Ing., D-72285 Pfalzgrafenweiler (DE); Rust, Sabine, Dipl.-Ing., D-71134 Aidlingen (DE); Zweigart, Gerhard, D-71134 Aidlingen (DE)

(56) Entgegenhaltungen:
- EP-A- 0 207 777
- EP-A- 0 499 020

## Beschreibung

Die Erfindung bezieht sich auf eine Sonnenblende für Fahrzeuge mit einem Sonnenblendenkörper und einer Sonnenblendenachse, die mit einem Endbereich in einem im Sonnenblendenkörper eingelagerten Lagergehäuse sitzt und von Federmitteln geklemmt wird, um den Sonnenblendenkörper in gewünschten Positionen zwischen einer Nichtgebrauchslage unter dem Fahrzeughimmel und einer Gebrauchslage vor der Windschutzscheibe zu halten, wobei die Sonnenblendenachse über einen mit den Federmitteln korrespondierenden Axialbereich eine Abflachung als Endrastung aufweist, die dazu dient, den Sonnenblendenkörper in der Nichtgebrauchslage gegen eine ungewollte Klappbewegung zu sichern Diese Sonnenblende entsprechend dem Oberbegriff des Anspruchs 1 ist aus der EP-A-0 499 020.

Sonnenblenden für Fahrzeuge bestehen im allgemeinen aus einem flachen, angenähert rechteckigem Sonnenblendenkörper, der oberhalb der Windschutzscheibe eines Fahrzeugs an der Fahrzeugkarosserie klappbeweglich befestigt ist. Die klappbewegliche Befestigung erfolgt über eine Sonnenblendenachse, die in ein Stirnende des Sonnenblendenkörpers mit einem Endbereich eingreift und mit dem anderen Endbereich in einem Lagerböckchen gelagert ist, welcher seinerseits an der Fahrzeugkarosserie befestigt ist. Der Sonnenblendenkörper befindet sich in der Nichtgebrauchslage in paralleler Anlage am Fahrzeughimmel und kann aus dieser Lage heraus von Hand ergriffen und in Richtung zur Windschutzscheibe und damit in die Gebrauchslage geklappt werden. Damit der Sonnenblendenkörper in jeder Klapposition verharrt, greift an der Sonnenblende eine Feder, eine Federdruckplatte oder dergleichen an, die in einem sich innerhalb des Sonnenblendenkörpers befindlichen Lagergehäuse angeordnet ist. Als zusätzliche Sicherung für den Sonnenblendenkörper in der Nichtgebrauchsposition dient eine Endrastung in Form einer an der Sonnenblendenachse ausgebildeten Abflachung, die sich über einen gewissen Axialbereich der Sonnenblendenachse erstreckt und auf das Federmaß abgestimmt ist. Beim Klappen des Sonnenblendenkörpers aus der Gebrauchslage in die Nichtgebrauchslage bewegt sich der Sonnenblendenkörper und damit auch das Federmittel um die Sonnenblendenachse. Dabei ist der Übergang vom runden zum abgeflachten Bereich der Sonnenblendenachse sehr abrupt, wobei es zum schlagartigen Bewegungsablauf kommt, wenn das Federmittel in die Abflachung der Sonnenblendenachse einfällt. Bei Dachhimmeln, die Polstereigenschaften aufweisen, kann der schlagartige Bewegungsablauf noch akzeptiert werden, nicht hingegen aber bei Dachhimmeln, die aus gepreßten z. B. mit Holzfasern angereicherten Trägern bestehen. Bei solchen Dachhimmeln aus hartem Material macht sich nämlich der schlagartige Bewegungsverlauf des Sonnenblendenkörpers beim Einfall der Feder in die Endrastung durch hohes und sehr unangenehmes Anschlaggeräusch bemerkbar, wodurch der Fahrzeuglenker leicht irritiert werden kann.

Der Erfindung liegt daher die Aufgabe zugrunde, eine Sonnenblende der eingangs genannten Art zu schaffen, bei der laute Anschlaggeräusche beim Anschlagen des Sonnenblendenkörpers am Dachhimmel vermieden werden.

Gemäß der Erfindung wird diese Aufgabe dadurch gelöst, daß die Sonnenblendenachse über den mit der Abflachung versehenen Axialbereich Bereiche unterschiedlichen Durchmessers aufweist und dabei ausgehend von einem Längsrand der Abflachung über einen ersten Umfangsbereich kreisbogenförmig und im Anschluß daran über einen zweiten Umfangsbereich zum anderen Längsrand der Abflachung hin spiralförmig im Durchmesser abnehmend ausgebildet ist.

Durch diese erfindungsgemäßen Maßnahmen kommt es nun nicht mehr zu einer schlagartigen Bewegung beim Einlauf der Feder auf die Abflachung der Sonnenblendenachse. Die Anschlaggeräusche konnten damit extrem gedämpft werden. Zudem konnte der stramme Sitz des Sonnenblendenkörpers in der Nichtgebrauchslage in gewohnter Weise aufrechterhalten werden.

Die erfindungsgemäßen Maßnahmen können noch dadurch optimiert werden, daß der zweite, spiralförmig im Durchmesser abnehmende Umfangsbereich der Sonnenblendenachse über einen Radius in die Abflachung übergeht. Durch diese Maßnahme wird der Sonnenblendenkörper weich in die Endrastposition gezogen.

Wie Untersuchungen und Versuche gezeigt haben, hat es sich als zweckmäßig erwiesen, daß der zweite, spiralförmig im Durchmesser abnehmende Umfangsbereich der Sonnenblendenachse sich über etwa 90 Winkelgrade erstreckt.

Ein Ausführungsbeispiel der Erfindung wird im folgenden anhand der Zeichnung näher erläutert. Es zeigen:
- Fig. 1: eine Sonnenblende in Ansicht,
- Fig. 2: einen Endbereich der Sonnenblendenachse der Sonnenblende nach Fig. 1,
- Fig. 3: einen Schnitt folgend der Linie A-A in Fig. 2,
- Fig. 4: einen Schnitt ähnlich dem nach Fig. 3 jedoch durch eine herkömmliche Ausführungsform einer Sonnenblendenachse, siehe z.B. eine Sonnenblendenachse nach der EP-A-0 499 020 und
- Fig. 5: einen Lagerkäfig mit Sonnenblendenachse.

Die Sonnenblende umfaßt einen Sonnenblendenkörper 1 in Form einer relativ flachen angenähert rechteckigen Platte, eine den Sonnenblendenkörper 1 tragende, L-förmig ausgebildete Sonnenblendenachse 2, die einendig in einem Lagerböckchen 3 sitzt und einen Gegenlagerstift 4, der lösbar in einem Gegenlagerböckchen (nicht gezeigt) einrastbar ist.

Im Sonnenblendenkörper 1 ist ein Lagerkäfig 5 eingelagert, der eine durch zumindest eine Feder 6 beaufschlagte Druckplatte 7 trägt. Der Lagerkäfig 5 nimmt einen Endbereich der Sonnenblendenachse 2 auf, wobei die Druckplatte 7 an dieser unter Druck der Feder 6 angreift.

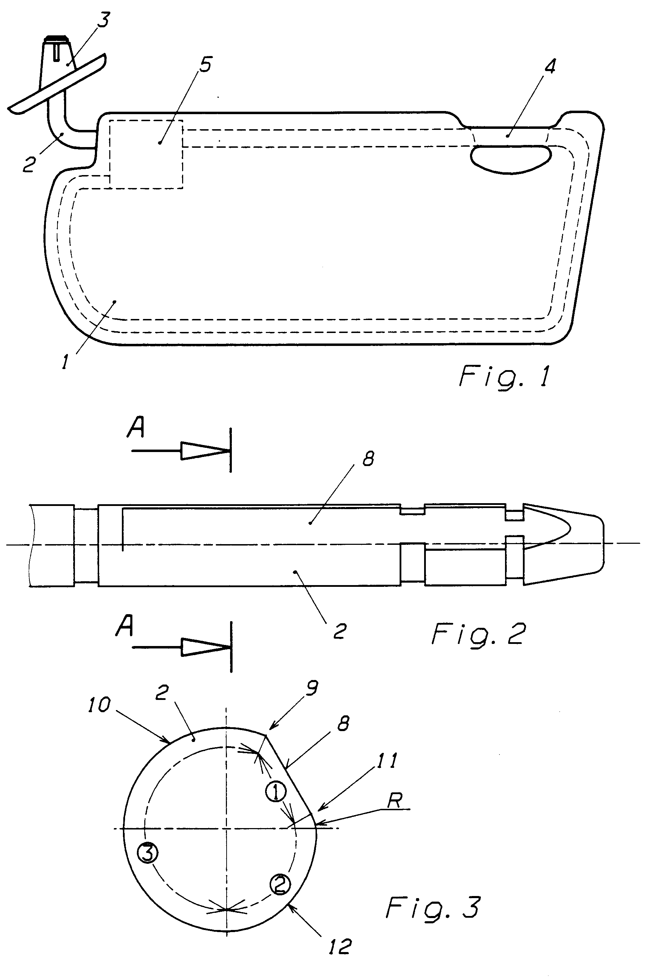

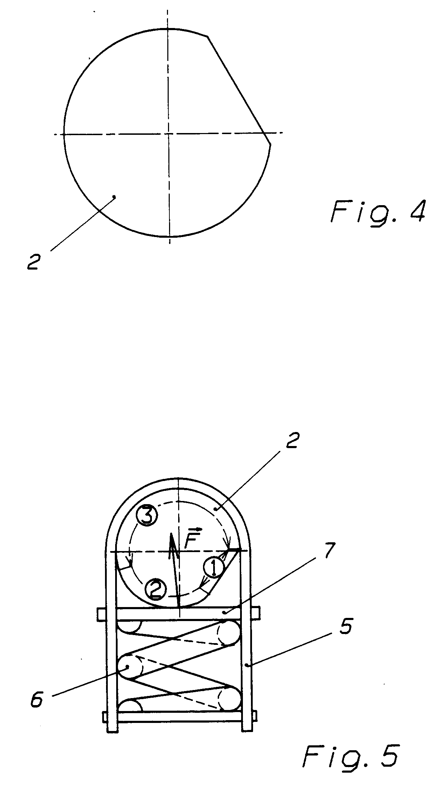

Während die Sonnenblendenachse 2 herkömmlicherweise, wie in Fig. 4 gezeigt, zylindrisch ausgebildet ist und lediglich über einen gewissen Axialbereich, an dem die Feder oder Druckplatte 7 angreift, mit einer Abflachung 8 versehen ist, weist die neue Sonnenblendenachse 2 über diesen Axialbereich drei unterschiedliche Zonen auf. Dabei besteht die Zone 1 (vgl. Fig. 3 und 5) aus einer Abflachung 8, die sich daran ausgehend von einem Längsrand 9 der Abflachung 8 anschließende Zone 3 aus einem Kreisbogen 10 und die sich daran anschließende Zone 2 aus einer zum anderen Längsrand 11 der Abflachung 8 hin abfallenden Spirale 12. Wichtig ist auch, daß der spiralförmig abfallende Umfangsbereich 12 über einen Radius R in die Abflachung 8 übergeht, weil sich hierdurch ein weiches eingleiten der Feder oder Druckplatte 7 in die durch die Abflachung 8 gebildete Endrastung ergibt.

Der Andruck der Druckplatte 7 auf die durch den Lagerkäfig abgestützte Sonnenblendenachse 2 ist am größten, wenn sich die Druckplatte im Bereich der dritten Zone (Kreisbogen 10) befindet. Dieser Bereich fällt mit der üblicherweise in Frage kommenden Gebrauchslage des Sonnenblendenkörpers 1 zusammen. Beim Hochklappen des Sonnenblendenkörpers 1 in die Nichtgebrauchslage bewegt sich die Druckplatte 7 von der Zone 3 weg, durchläuft die Zone 2 und kommt schließlich parallel auf der Zone 1, der Abflachung 8 zur Anlage. Dabei wird durch die zur Abflachung 8 hin spiralförmig im Durchmesser abnehmende Ausbildung der Sonnenblendenachse 2 und dem als Radius R gestalteten Übergang zur Abflachung 8 ein schlagartiger Bewegungsablauf vermieden. In Folge dessen schlägt der Sonnenblendenkörper auch nicht mehr hart an der Dachverkleidung an.

Es versteht sich, daß die Druckplatte 7 höhenveränderlich am Lagerkäfig 5 angeordnet ist. Ebenso versteht es sich, daß der Lagerkäfig 5 gegen ein Lagergehäuse und die Druckplatte 7 gegen eine U-förmig gebogene Blattfeder, wie sie z.B. in der DE-C-25 51 633 gezeigt ist, austauschbar ist, denn entscheidend ist die besondere Ausbildung der Sonnenblendenachse 2.

## Patentansprüche

1. Sonnenblende für Fahrzeuge mit einem Sonnenblendenkörper (1) und einer Sonnenblendenachse (2), die mit einem Endbereich in einem im Sonnenblendenkörper (1) eingelagerten Lagergehäuse (3) sitzt und von Federmitteln geklemmt wird, um den Sonnenblendenkörper (1) in gewünschten Positionen zwischen einer Nichtgebrauchslage unter dem Fahrzeughimmel und einer Gebrauchslage vor der Windschutzscheibe zu halten, wobei die Sonnenblendenachse (2) über einen mit den Federmitteln korrespondierenden Axialbereich eine Abflachung (8) als Endrastung aufweist, die dazu dient, den Sonnenblendenkörper (1) in der Nichtgebrauchslage gegen eine ungewollte Klappbewegung zu sichern, dadurch gekennzeichnet, daß die Sonnenblendenachse (2) über den mit der Abflachung (8) versehenen Axialbereich Bereiche unterschiedlichen Durchmessers aufweist und dabei ausgehend von einem Längsrand (9) der Abflachung (8) über einen ersten Umfangsbereich kreisbogenförmig und im Anschluß daran über einen zweiten Umfangsbereich zum anderen Längsrand (11) der Abflachung (8) hin spiralförmig im Durchmesser abnehmend ausgebildet ist.

2. Sonnenblende nach Anspruch 1, dadurch gekennzeichnet, daß der zweite, spiralförmig im Durchmesser abnehmende Umfangsbereich der Sonnenblendenachse (2) über einen Radius (R) in die Abflachung (8) übergeht.

3. Sonnenblende nach Anspruch 1 oder 2, dadurch gekennzeichnet, daß der zweite, spiralförmig im Durchmesser abnehmende Umfangsbereich der Sonnenblendenachse (2) sich über etwa 90 Winkelgrade erstreckt.

## Claims

1. A sun visor for vehicles composed of a sun visor body (1) and a sun visor axle (2), which is supported with an end part in a support housing (3) which is supported in the sun visor body (1) and which is clamped by spring means, in order to maintain the sun visor body (1) in desired positions between a position of non-use beneath the roof of the vehicle and a position of use facing the windshield, whereby the sun visor axle (2) comprises in an axial part coupled with the spring means a flat part (8) as an end-detent, which entails that the sun visor body (1) in the position of non-use is secured against an unwanted tilting movement, characterized in that the sun visor axle (2) comprises on the axial part provided with the flat part (8), areas of different diameter and in that it has, beginning from a longitudinal edge (9) of the flat part (8), along a first peripheral part, a semicircular shape and then, along a second peripheral part, a spiral shape, whose diameter decreases towards the other longitudinal edge (11) of the flat part (8).

2. Sun visor according to claim 1, characterized in that the second peripheral part of the sun visor axle (2), whose diameter decreases along a spiral, is connected to the flat part (8) by way of a radius (R).

3. Sun visor according to claim 1 or 2, characterized in that the second peripheral part of the sun visor axle (2), whose diameter decreases along a spiral, extends along approximately a 90 degree angle.

## Revendications

1. Pare-soleil pour véhicules comprenant un corps (1) du pare-soleil et un axe (2) du pare-soleil lequel est reçu à sa partie terminale dans un corps support (3), soutenu dans le corps (1) du pare-soleil, et est verrouillé par des moyens à ressort pour maintenir le corps (1) du pare-soleil à la position désirée entre une position de non utilisation au-dessous du toit du véhicule et une position d'utilisation en regard du pare-brise, l'axe (2) du pare-soleil présentant, le long d'une zone axiale en correspondance avec les moyens à ressort, un méplat (8) formant encliquetage final, lequel sert à assurer le corps (1) du pare-soleil à la position de non utilisation, contre un mouvement non souhaité de relevage, caractérisé en ce que l'axe (2) du pare-soleil présente, le long de sa zone axiale munie du méplat (8), des parties de diamètre différent et, à partir d'une bordure longitudinale (9) du méplat (8), il est conformé en forme d'un arc de cercle le long d'une première zone de périmètre et, en se raccordant avec celle-ci, en forme de spirale de diamètre allant décroissant le long d'une deuxième zone de périmètre et vers l'autre bordure longitudinale (11) du méplat (8).

2. Pare-soleil selon la revendication 1, caractérisé en ce que la deuxième zone de périmètre de l'axe (2) du pare-soleil, de diamètre allant décroissant en forme de spirale, se raccorde avec le méplat (8) par l'intermédiaire d'un rayon R.

3. Pare-soleil selon la revendication 1 ou 2, caractérisé en ce que la deuxième zone de périmètre de l'axe (2) du pare-soleil, de diamètre allant décroissant en forme de spirale, s'étend selon un angle d'environ 90 degrés.
